# EUROPÄISCHE PATENTSCHRIFT

(11) **EP 3 074 278 B1**
(45) Veröffentlichungstag und Bekanntmachung des Hinweises auf die Patenterteilung: **01.05.2019**
(21) Anmeldenummer: 14806177.3
(22) Anmeldetag: 26.11.2014
(51) Int. Cl.: B60R 11/04

(54) **KRAFTFAHRZEUGKAMERASYSTEM**
MOTOR VEHICLE CAMERA SYSTEM
SYSTÈME DE CAMÉRA DE VÉHICULE AUTOMOBILE

(30) Priorität: 27.11.2013 DE 102013018022
(43) Veröffentlichungstag der Anmeldung: 05.10.2016
(73) Patentinhaber: Huf Hülsbeck & Fürst GmbH & Co. KG, 42551 Velbert (DE)
(72) Erfinder: BUSCHMANN, Gerd, 42553 Velbert (DE); SCHÜTZ, Heiko, 42549 Velbert (DE)
(74) Vertreter: Patentanwaltskanzlei Methling
(86) Internationale Anmeldenummer: PCT/EP2014/003145
(87) Internationale Veröffentlichungsnummer: WO 2015/078577

(56) Entgegenhaltungen:
- EP-A2- 1 332 923
- WO-A2-2004/047421
- DE-A1-102006 039 192
- DE-A1-102007 052 402
- DE-U1- 29 806 638
- FR-A1- 2 858 280
- JP-A- H11 245 729
- JP-A- 2006 193 070
- KR-A- 20120 066 294
- US-A1- 2007 115 099
- US-A1- 2013 209 079

## Beschreibung

Die Erfindung betrifft ein Kraftfahrzeugkamerasystem mit einer Bilderfassungseinheit und einer Antriebseinrichtung, mittels derer die Bilderfassungseinheit von einer Ruheposition in zumindest eine Betriebsposition verfahrbar ist, wobei die Bilderfassungseinheit in einem Aufnahmeraum eines Kraftfahrzeuges angeordnet ist und der Aufnahmeraum ein bewegliches Verschlusselement aufweist, wobei das Verschlusselement den Aufnahmeraum verschließt, wenn die Bilderfassungseinheit in ihrer Ruheposition ist, und den Aufnahmeraum zumindest teilweise zur Umgebung hin öffnet, wenn die Bilderfassungseinheit in eine Betriebsposition verfahren ist.

Ein derartiges Kraftfahrzeugkamerasystem ist aus der DE 10 2006 023 103 A1 bekannt.

Aus Dokument EP 1 332 923 A2 ist eine Einparkvorrichtung für einen Pkw mit einer Bilderfassungseinheit und einer Bilddarstellungseinheit bekannt, wobei die Bilderfassungseinheit zumindest in einer Ruheposition von außen im Wesentlichen unzugänglich hinter einem Schutzelement angeordnet ist und im Schutzelement eine der Bilderfassungseinheit zugeordnete Ausnehmung vorgesehen ist.

Aus Dokument DE 10 2006 039 192 A1 ist eine Vorrichtung zur Schlossöffnung und Bilderfassung bekannt, die eine Trägerschale, eine klappbeweglich gelagerte Handhabe und eine an der Rückwand der Trägerschale angeordnete Kamera aufweist, wobei die Rückwand ein Loch aufweist, hinter dem ein Modulgehäuse mit einem verfahrbaren Träger für die Kamera befestigt ist.

Aus Dokument JP H11 245729 A, das dem Oberbegriff von Anspruch 1 entspricht, ist eine bewegbare Fahrzeugheckkamera bekannt, die eine bewegliche sowie transparente Abdeckung aufweist.

Aus Dokument KR 2012 0066294 A ist eine Kameravorrichtung bekannt, bei der die Kamera rotatorisch bewegbar ist und hinter einer transparenten Abdeckung angeordnet ist.

Aus Dokument WO 2004/047421 A2 ist ein Bildaufnahmesystem für ein Fahrzeug bekannt, umfassend ein belüftetes Kameramodul aus einem Gehäuse und einem Bildsensor, wobei das Gehäuse einen Belüftungsabschnitt aufweist, der wasserdampf-durchlässig, aber nicht wasser-durchlässig ist.

Aus Dokument DE 298 06 638 U1 ist eine Kameraüberwachungseinrichtung mit einer im Heckbereich eines Fahrzeugs angeordneten Kamera bekannt, wobei die Kamera auf einem Schaltungsträger einer Heckleuchteneinheit installiert ist.

Aus Dokument JP 2006 193070 A ist eine hinter einem magischen Spiegel fest installierte Fahrzeugheckkamera bekannt.

Bei derartigen Kraftfahrzeugkamerasystemen erfolgt das Verfahren der Bilderfassungseinheit von der Ruheposition in eine Betriebsposition, damit mittels der Bilderfassungseinheit in der Betriebsposition auch solche Außenbereiche des Kraftfahrzeuges erfassbar sind, wie beispielsweise ein toter Winkel unterhalb des Kraftfahrzeughecks beim Zurücksetzen des Fahrzeuges, die aus der Ruheposition heraus nicht von der Bilderfassungseinheit erfasst werden können. Sofern bei dem Kraftfahrzeugkamerasystem die Bilderfassungseinheit jedoch nicht in die Betriebsposition verfahren ist, so befindet sich die Bilderfassungseinheit in einer Ruheposition, in welcher sie in einem Aufnahmeraum des Kraftfahrzeuges angeordnet ist, so dass der optische Gesamteindruck des Kraftfahrzeuges nicht durch eine nach außen ragende Bilderfassungseinheit gestört wird. Daher ist die Bilderfassungseinheit in eine Ruheposition verfahrbar, in welcher der Aufnahmeraum durch das Verschlusselement verschlossen ist. Ist die Bilderfassungseinheit in die Betriebsposition verfahren, so ist der Aufnahmeraum zumindest teilweise zur Umgebung hin geöffnet, so dass es möglich ist, den Außenbereich des Kraftfahrzeuges mittels der Bilderfassungseinheit zu erfassen.

Nachteilig bei den bekannten Kraftfahrzeugkamerasystemen ist es, dass die Bilderfassungseinheit in ihrer Ruheposition nicht genutzt werden kann.

Die Aufgabe der Erfindung ist es, ein Kraftfahrzeugkamerasystem derart weiterzubilden, dass das Kraftfahrzeugkamerasystem eine bessere Nutzbarkeit ermöglicht und insbesondere die Bilderfassungseinheit auch in ihrer Ruheposition genutzt werden kann.

Diese Aufgabe wird erfindungsgemäß durch ein Kraftfahrzeugkamerasystem gemäß Anspruch 1 gelöst. Vorteilhafte Weiterbildungen der Erfindung sind in den Unteransprüchen angegeben.

Besonders vorteilhaft bei dem Kraftfahrzeugkamerasystem mit einer Bilderfassungseinheit und einer Antriebseinrichtung, mittels derer die Bilderfassungseinheit von einer Ruheposition in zumindest eine Betriebsposition verfahrbar ist, wobei die Bilderfassungseinheit in einem Aufnahmeraum eines Kraftfahrzeuges angeordnet ist und der Aufnahmeraum ein bewegliches Verschlusselement aufweist, wobei das Verschlusselement den Aufnahmeraum verschließt, wenn die Bilderfassungseinheit in ihrer Ruheposition ist, und den Aufnahmeraum zumindest teilweise zur Umgebung hin öffnet, wenn die Bilderfassungseinheit in eine Betriebsposition verfahren ist, ist es, dass das Verschlusselement zumindest teilweise transparent ist und die Bilderfassungseinheit in ihrer Ruheposition derart ausgerichtet ist, dass die Bilderfassungseinheit in ihrer Ruheposition durch das Verschlusselement hindurch einen Außenbereich des Kraftfahrzeuges erfasst.

Erfindungsgemäß ist somit vorgesehen, dass das Verschlusselement zumindest teilweise transparent ist. Das Verschlusselement kann somit einen oder mehrere transparente Sektoren oder Abschnitte aufweisen, oder vollständig transparent ausgeführt sein, so dass Licht von außen in den Aufnahmeraum, in welchem die Bilderfassungseinheit angeordnet ist, hineinfallen kann, so dass ein Außenbereich des Kraftfahrzeuges durch das Verschlusselement hindurch mittels der Bilderfassungseinheit erfassbar ist, auch wenn die Bilderfassungseinheit in ihrer Ruheposition in dem Aufnahmeraum des Kraftfahrzeuges ist. Die Bilderfassungseinheit umfasst dabei beispielsweise eine Kamera. Die Bilderfassungseinheit kann ferner weitere Komponenten wie beispielsweise einen Restlichtverstärker und dergleichen und/oder Filter zur Herausfilterung bestimmter Lichtanteile aufweisen. Die Bilderfassungseinheit kann somit insbesondere ein Objektiv einer Kamera oder eine vollständige Kamera umfassen.

Der Aufnahmeraum, in welchem die Bilderfassungseinheit angeordnet ist, kann innerhalb des Kraftfahrzeuges angeordnet sein, insbesondere einen Teil der Fahrzeugkarosserie bilden oder innerhalb der Fahrzeugkarosserie angeordnet sein. Dabei kann es sich beispielsweise um die Heckklappe, einen Kotflügel, einen Stoßfänger oder dergleichen eines Kraftfahrzeuges handeln. In dem Fall dass das Kraftfahrzeugkamerasystem als Rückfahrkamera eines Kraftfahrzeuges eingesetzt wird, befindet sich der Aufnahmeraum am Heck des Kraftfahrzeuges und die Bilderfassungseinheit ist dergestalt zwischen einer Ruheposition und zumindest einer Betriebsposition verfahrbar, so dass die Bilderfassungseinheit in ihrer Betriebsposition den Außenbereich hinter und/oder unterhalb des Kraftfahrzeuges erfassen kann.

In der Ruheposition ist die Bilderfassungseinheit innerhalb des Aufnahmeraumes angeordnet, wobei der Aufnahmeraum durch das Verschlusselement verschlossen ist. Dabei ist die Bilderfassungseinheit dergestalt ausgerichtet, dass in der Ruheposition mittels der Bilderfassungseinheit durch das Verschlusselement hindurch ein Außenbereich des Kraftfahrzeuges erfasst werden kann, wobei der Blickwinkel von dem Blickwinkel in der Betriebsposition abweicht oder abweichen kann, wobei es sich insbesondere um einen gegenüber der Betriebsposition verkleinerten Blickwinkel handeln kann. In der Ruheposition der Bilderfassungseinheit kann das Kraftfahrzeugkamerasystem somit beispielsweise die Funktion eines Rückspiegels übernehmen. Ferner kann das Kraftfahrzeugkamerasystem mit der in ihrer Ruheposition befindlichen Bilderfassungseinheit als Unfalldatenschreiber und/oder als Unfallwarnsensor dienen. Hierzu können entsprechende Bildauswerteeinheiten vorgesehen sein, mittels derer die Annäherung eines anderen Kraftfahrzeuges und/oder eines Hindernisses detektierbar ist, um beispielsweise die Sicherheitsgurte der Kraftfahrzeuginsassen zu straffen und/oder Kopfstützen in ihre im Falle eines Unfalles maximale Schutzwirkung entfaltende Position zu verfahren. Bei Verwendung des Kraftfahrzeugkamerasystems als Unfalldatenschreiber kann eine Datenspeicherungseinheit vorgesehen sein, mittels derer die mit der Bilderfassungseinheit erfassten Bilddaten dauerhaft oder flüchtig gespeichert werden können.

Die Bilderfassungseinheit ist zwischen einer Ruheposition und zumindest einer Betriebsposition verfahrbar. Mit dem Begriff verfahrbar ist dabei jede mögliche Bewegung zwischen der Ruheposition und der Betriebsposition mit umfasst, das heißt, dass sowohl translatorische als auch rotatorische Bewegungen sowie mögliche Kombinationen und Aneinanderreihungen von translatorischen und rotatorischen Bewegungen mit umfasst ist. Insbesondere kann die Bilderfassungseinheit verschwenkbar zwischen einer Ruheposition und einer Betriebsposition angeordnet sein.

Besonders vorteilhaft bei der Erfindung ist es, dass die Bilderfassungseinheit, wie beispielsweise eine Kamera oder ein Kameraobjektiv, stets verfügbar ist und das Kraftfahrzeugkamerasystem somit neben der bekannten Funktion als Rückfahrkamera gegebenenfalls weitere Funktionen erfüllen kann, wie die eines elektronischen Rückspiegels, wenn die in der Ruheposition durch die Bilderfassungseinheit erfassten Bilder des Außenbereiches des Kraftfahrzeuges beispielsweise auf einer Bildwiedergabeeinrichtung innerhalb des Kraftfahrzeuges im Blickfeld des Fahrers wiedergeben werden. Besonders vorteilhaft ist somit die stete Verfügbarkeit und Nutzbarkeit der Bilderfassungseinheit bei dem erfindungsgemäßen Kraftfahrzeugkamerasystem.

Bei Verwendung des Kraftfahrzeugkamerasystems als Rückfahrkamera ermöglicht das Verfahren der Bilderfassungseinheit von der Ruheposition in die Betriebsposition beispielsweise auch das Erfassen des Bereiches unterhalb des Stoßfängers und/oder unmittelbar hinter dem Stoßfänger des Fahrzeuges, welcher von der Bilderfassungseinheit jedoch nicht erfasst werden, kann solange sich die Bilderfassungseinheit in dem Aufnahmeraum in ihrer Ruheposition befindet. Daher wird die Bilderfassungseinheit in die Betriebsposition verfahren, wodurch der Außenbereich des Kraftfahrzeuges, welcher mittels der Bilderfassungseinheit erfasst wird, vergrößert und/oder verändert wird gegenüber jenem Außenbereich des Kraftfahrzeuges, welcher mittels der Bilderfassungseinheit in ihrer Ruheposition durch das Verschlusselement hindurch erfasst wird.

Dabei kann die Bilderfassungseinheit in der Betriebsposition zumindest teilweise außerhalb des Aufnahmeraums angeordnet sein.

Das bedeutet, dass die Bilderfassungseinheit in dieser bevorzugten Ausführungsform derart verfahrbar angeordnet ist, dass sie in der Betriebsposition zumindest teilweise aus dem Aufnahmeraum herausragt und gegebenenfalls gegenüber der Ausrichtung in ihrer Ruheposition verschwenkt wird, um bestimmte Bereiche des Außenbereiches des Kraftfahrzeuges mittels der Bilderfassungseinheit erfassen zu können.

Dabei kann die Bilderfassungseinheit in der Betriebsposition eine andere relative Ausrichtung gegenüber dem Kraftfahrzeug aufweisen als in der Ruheposition.

Dies bedeutet, dass beispielsweise die Bilderfassungseinheit in ihrer Ruheposition eine waagerechte Ausrichtung aufweist, so dass das Kamerasystem als Rückspiegel und/oder Unfallwarnsensor und/oder Unfalldatenschreiber den nachfolgenden Verkehr hinter dem Kraftfahrzeug erfasst, wohingegen die Bilderfassungseinheit in der Betriebsposition eine Ausrichtung unter einem Winkel α gegen die Waagerechte schräg nach unten hinter das Fahrzeug aufweist, um in der Betriebsposition den Bereich unmittelbar hinter dem Fahrzeug zu erfassen, wenn das Kraftfahrzeugkamerasystem als Teil eines Rückfahrkamerasystems des Kraftfahrzeuges eingesetzt wird. In der Betriebsposition ist dann der Bereich unterhalb des Stoßfängers im Blickfeld der Bilderfassungseinheit.

Erfindungsgemäß ist das Verschlusselement unidirektional transparent, so dass Licht von außen in den Aufnahmeraum eindringt und von der Bilderfassungseinheit erfasst wird, wobei kein oder nur wenig sichtbares Licht aus dem Aufnahmeraum sichtbar nach außen dringt.

Besonders vorteilhaft bei dieser Ausführungsform ist es, dass das Kamerasystem auch bei geschlossenem Verschlusselement, wenn die Bilderfassungseinheit in ihrer Ruheposition ist, als Kamerasystem verwendet werden kann, wobei ein außen stehender Betrachter nicht in den Aufnahmeraum hineinblicken kann, so dass das Kraftfahrzeugdesign des Fahrzeuges und dessen optischer Gesamteindruck für den Betrachter nicht beeinträchtigt wird. In diesem Fall hat das Verschlusselement Eigenschaften, wie sie ein Einwegspiegel oder halbdurchlässiger Spiegel aufweist. Dabei bedient man sich einer Schwäche des menschlichen Auges bzw. aller optischer Aufnahmegeräte, nämlich dass immer nur ein begrenzter Bereich des vorhandenen Helligkeitsspektrums erfasst werden kann, während übrige Bereiche über- oder unterbelichtet erscheinen, da ein Medium, welches die genannten Eigenschaften mit sich bringt, nach heutigem physikalischen Verständnis nicht möglich ist. Gemeint ist mit dem Merkmal der unidirektionalen Transparenz somit die beschriebene optische Eigenschaft aufgrund der genannten Schwäche des menschlichen Auges und optischer Aufnahmegeräte.

Die Bilderfassungseinheit kann eine oder mehrere optische Linsen aufweisen und/oder ein optisches Linsensystem aufweisen. Bei den optischen Linsen kann es sich um Sammellinsen oder Streulinsen oder Kombinationen von Sammellinsen und/oder Streulinsen handeln. Durch derartige Linsen oder Linsensysteme kann der Außenbereich des Kraftfahrzeuges, insbesondere der Blickwinkel, welcher durch die Bilderfassungseinheit optisch erfasst wird, beeinflusst werden.

In einer weiteren Ausführungsform weist die Bilderfassungseinheit ein Weitwinkelobjektiv oder ein Fischaugenobjektiv auf. Durch ein solches Weitwinkelobjektiv oder Fischaugenobjektiv ist es möglich, einen besonders großen Bereich des Außenbereiches außerhalb des Kraftfahrzeuges mittels der Bilderfassungseinheit zu erfassen.

Ferner kann das Verschlusselement selbst als optische Linse oder als optisches Linsensystem ausgebildet sein. Dabei kann es sich wiederum um Sammellinsen oder Streulinsen oder Kombinationen von Sammellinsen und/oder Streulinsen handeln, um den Beobachtungsbereich des Kraftfahrzeugkamerasystems entsprechend zu beeinflussen.

Vorzugsweise ist die Position der Bilderfassungseinheit innerhalb des Aufnahmeraums mittels der Antriebseinrichtung variierbar. Dies bedeutet, dass die Bilderfassungseinheit innerhalb des Aufnahmeraums mittels der Antriebseinrichtung verfahrbar ist, so dass die Lage der Bilderfassungseinheit innerhalb des Aufnahmeraumes den jeweiligen Anforderungen angepasst werden kann, um beispielsweise den Beobachtungsbereich, welcher mittels der Bilderfassungseinheit bei geschlossenem Verschlusselement erfasst wird, zu vergrößern oder zu verkleinern, je nach Anforderung und Anwendungsbereich des Kraftfahrzeugkamerasystems. Wird dieses bei geschlossenem Verschlusselement beispielsweise als Unfallwarnsensor zur Früherkennung einer Unfallgefahr eingesetzt, so kann durch Variierung der Position der Bilderfassungseinheit innerhalb des Aufnahmeraumes, insbesondere bei Anordnung einer oder mehrerer optischer Linsen oder eines optischen Linsensystems, der Beobachtungsbereich, der mittels der Bilderfassungseinheit durch das verschlossene Verschlusselement hindurch erfasst wird, variiert werden, so dass dieser beispielsweise der Fahrgeschwindigkeit des Kraftfahrzeuges angepasst werden kann. So ist es beispielsweise bei niedrigeren Fahrgeschwindigkeiten im innerstädtischen Bereich vorteilhaft, wenn ein breiterer Nahbereich hinter dem Fahrzeug beobachtet wird, während bei höheren Fahrgeschwindigkeiten, wie sie auf Autobahnen gefahren werden, es vorteilhaft ist, wenn ein schmalerer Bereich, das heißt ein Bereich mit einem engeren Blickwinkel hinter dem Fahrzeug, beobachtet wird, jedoch mit einer größeren Beobachtungstiefe hinter dem Fahrzeug.

Vorzugsweise ist die Bilderfassungseinheit mit einer Recheneinheit zur Auswertung und/oder Übermittlung von Bilddaten und/oder mit einer Bildwiedergabeeinrichtung in dem Kraftfahrzeug verbunden.

Mittels einer derartigen Recheneinheit zur Auswertung und/oder Übermittlung von Bilddaten ist eine Auswertung der mittels der Bilderfassungseinheit ermittelten Bilddaten möglich, so dass bei einer Annäherung eines Kraftfahrzeuges und/oder eines Hindernisses eine unmittelbare Unfallgefahr mittels des Kraftfahrzeugkamerasystems detektierbar ist, um beispielsweise vor einem Aufprall die Sicherheitsgurte zu straffen und/oder die Fahrzeugsitze und insbesondere die Kopfstützen in eine solche Position zu verfahren, in welchem sie den größtmöglichen Schutz für die Kraftfahrzeuginsassen bieten. Ferner ist mittels einer solchen Recheneinheit auch eine Umrechung von Bilddaten eines Weitwinkelobjektivs oder eines Fischaugenobjektivs in eine bessere Darstellung für den Fahrer des Kraftfahrzeuges möglich, wenn die Bilddaten auf einer Bildwiedergabeeinrichtung in dem Kraftfahrzeug wiedergegeben werden. Dabei ist in dem Kraftfahrzeug ein Monitor angeordnet, welcher zur Wiedergabe der Bilddaten des Kraftfahrzeugkamerasystems verwendet wird.

Bei dem Verschlusselement handelt es sich in einer bevorzugten Ausführungsform um ein Emblem insbesondere eines Kraftfahrzeugherstellers. Ferner kann das Verschlusselement als Zierelement ausgebildet sein.

Hierdurch ist eine optisch vorteilhafte Integration des Verschlusselementes in die Kraftfahrzeugkarosserie möglich.

Erfindungsgemäß ist das Verschlusselement durch eine Handhabe zur Betätigung einer Tür und/oder Klappe des Kraftfahrzeuges gebildet.

Eine solche Handhabe kann von einem Benutzer ergriffen werden, um eine Tür oder Klappe, wie beispielsweise die Heckklappe, des Kraftfahrzeuges zu öffnen. Hierzu wird die Handhabe von einer ersten Position entsprechend einer Ruheposition in eine Betätigungsposition von dem Benutzer verlagert, um die Tür oder Klappe zu öffnen. Dabei kann die Betätigungsposition der Handhabe zur Öffnung der Tür oder Klappe jener Position entsprechen, in welche das Verschlusselement verlagert wird, wenn die Bilderfassungseinheit in eine Betriebsposition verfahren ist, oder alternativ eine hiervon abweichende Position einnehmen. Alternativ oder kumulativ kann ein solches als Handhabe zur Öffnung einer Tür oder Klappe ausgebildetes Verschlusselement gleichzeitig als Emblem insbesondere eines Kraftfahrzeugherstellers ausgebildet sein.

Zwei Ausführungsbeispiele der Erfindung sind in den Figuren dargestellt und werden nachfolgend näher erläutert. Es zeigen:
- Fig. 1: Eine Schnittansicht des Aufnahmeraums mit darin angeordneter Bilderfassungseinheit in der Ruheposition eines ersten Ausführungsbeispiels;
- Fig. 2: eine Schnittansicht des Aufnahmeraums mit der Bilderfassungseinheit in der Betriebsposition des Ausführungsbeispiels nach Figur 1;
- Fig. 3: eine Schnittansicht des Aufnahmeraums mit darin angeordneter Bilderfassungseinheit in der Ruheposition eines zweiten Ausführungsbeispiels;
- Fig. 4: eine Schnittansicht des Aufnahmeraums mit darin angeordneter Bilderfassungseinheit in der Ruheposition des zweiten Ausführungsbeispiels nach Figur 3 bei manueller Betätigung des als Handhabe ausgebildeten Verschlusselementes;
- Fig. 5: eine Schnittansicht des Aufnahmeraums mit der Bilderfassungseinheit in der Betriebsposition des zweiten Ausführungsbeispiels;

Identische Bauteile in den Figuren sind mit identischen Bezugszeichen versehen.

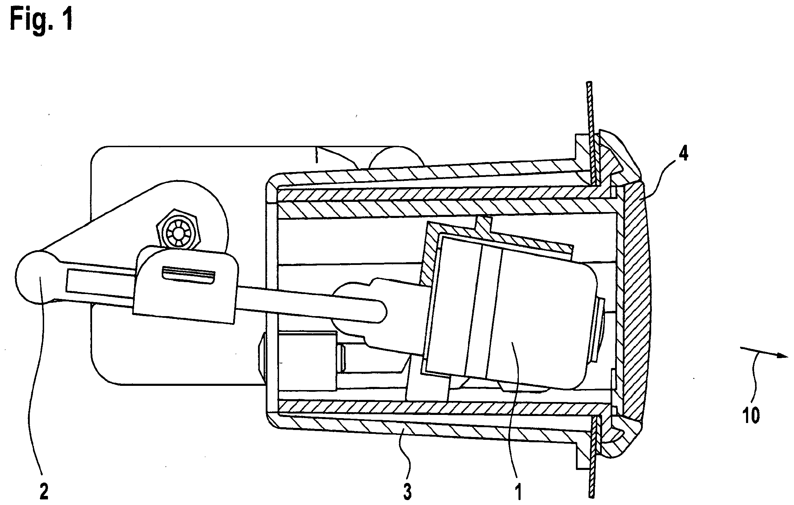

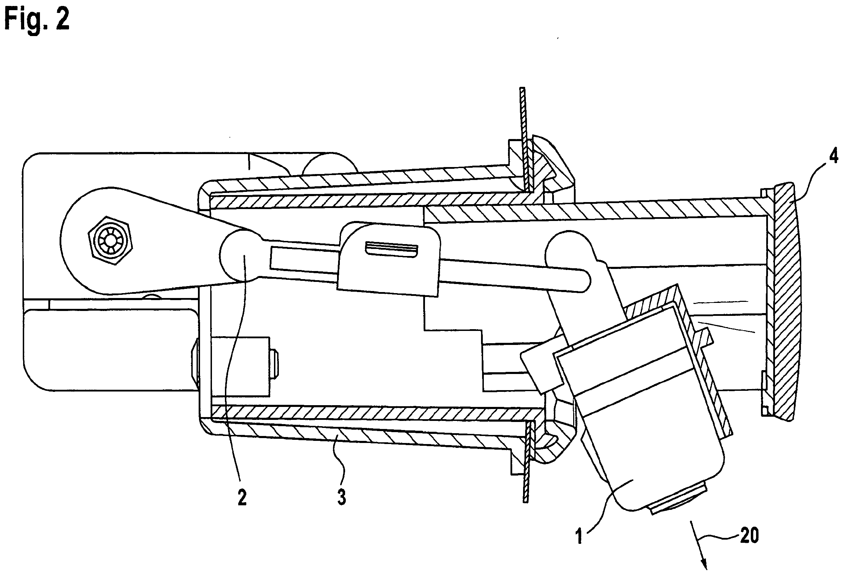

Die Figuren 1 und 2 zeigen Schnittansichten eines Kraftfahrzeugkamerasystems, wobei sich bei der Darstellung gemäß Fig. 1 die Bilderfassungseinheit 1 innerhalb des Aufnahmeraums 3 in ihrer Ruheposition befindet, wohingegen die Bilderfassungseinheit 1 bei der Darstellung gemäß Fig. 2 ihre Betriebsposition verfahren ist.

Die Bilderfassungseinheit 1 in Form einer Kamera ist innerhalb des Aufnahmeraums 3 verfahrbar angeordnet. Der Aufnahmeraum 3 ist gebildet durch ein Gehäuse, welches die Bilderfassungseinheit 1 aufnimmt. Das Verfahren der Bilderfassungseinheit 1 von der in Fig. 1 dargestellten Ruheposition in die in Fig. 2 dargestellte Betriebsposition erfolgt mittels der Antriebseinrichtung 2, die mehrere Hebel und Gelenke umfasst.

Das Verfahren der Bilderfassungseinheit 1 von der Ruheposition gemäß Fig. 1 in die Betriebsposition gemäß Fig. 2 erfolgt durch eine Kombination translatorischer und rotatorischer Bewegungen, so dass in der Betriebsposition 2 die Bilderfassungseinheit 1 einerseits translatorisch aus dem Aufnahmeraum 3 in Form des Gehäuses herausgefahren und ferner um einen Drehpunkt verschwenkt wurde, so dass die Blickrichtung der Bilderfassungseinheit 1 in der Betriebsposition gemäß Fig. 2 eine andere ist, als in der Ruheposition gemäß Fig. 1.

Verdeutlicht wird die Blickrichtung der Bilderfassungseinheit 1 einerseits durch den Pfeil 10, der die Blickrichtung in der Ruheposition gemäß Fig. 1 charakterisiert und ferner durch den Pfeil 20 gemäß Fig. 2, der die Blickrichtung der Bilderfassungseinheit 1 in der Betriebsposition gemäß Fig. 2 charakterisiert. Mit der Blickrichtung ist gleichermaßen die Mittellinie des optischen Erfassungsbereiches der Bilderfassungseinheit 1 bezeichnet.

In der Ruheposition gemäß Fig. 1, in welcher sich die Bilderfassungseinheit 1 vollständig innerhalb des Aufnahmeraums 3 befindet, ist der Aufnahmeraum 3 durch das Verschlusselement 4 gegen die Umgebung verschlossen. Um das Verlagern der Bilderfassungseinheit 1 von der Ruheposition gemäß Fig. 1 in die Betriebsposition gemäß Fig. 2 mittels der Antriebseinheit 2 zu ermöglichen, wird das Verschlusselement 4 wie dies in Fig. 2 erkennbar ist, nach außen verfahren, so dass der Aufnahmeraum 3 teilweise zur Umgebung hin geöffnet wird und die Bilderfassungseinheit 1 in die Betriebsposition gemäß Fig. 2 verfahren werden kann, in welcher sie nach einem translatorischen Verfahren ferner verschwenkt wird, so dass die Bilderfassungseinheit 1 in der Betriebsposition gemäß Fig. 2 eine andere Blickrichtung entsprechend des Pfeils 20 aufweist, als dies in der Ruheposition gemäß Fig. 1 der Fall ist.

Das Verschlusselement 4 verhindert in der geschlossenen Position gemäß Fig. 1 ein Eindringen von Schmutz in den Aufnahmeraum 3, wodurch ebenfalls ein Verschmutzen der Bilderfassungseinheit 1 verhindert wird.

Das Verschlusselement 4 ist transparent, so dass die Bilderfassungseinheit 1 in ihrer Ruheposition gemäß Fig. 1 durch das Verschlusselement 4 hindurch den Außenbereich hinter dem nicht dargestellten Kraftfahrzeug erfassen kann. Die Blickrichtung ist dabei durch den Pfeil 10 angedeutet.

In der Ruheposition gemäß Fig. 1 kann daher mittels der Bilderfassungseinheit 1 der nachfolgende Verkehr hinter dem Kraftfahrzeug durch das Verschlusselement 4 hindurch erfasst werden, so dass das Kamerasystem als elektronischer Rückspiegel verwendet werden kann, in dem die mittels der Bilderfassungseinheit 1 erfassten Bilder im Kraftfahrzeuginnenraum auf einem Monitor zur Anzeige gebracht werden.

Ferner kann das Kamerasystem als Unfallwarnsensor eingesetzt werden, in dem eine elektronische Bildauswertung der mittels der Bilderfassungseinheit 1 erfassten Bilder des Bereiches hinter dem Kraftfahrzeug mittels einer Auswerteeinheit durchgeführt wird, um beispielsweise eine gefährliche Annäherung eines anderen Kraftfahrzeuges zu erkennen. Wird eine solche gefährliche Annäherung eines anderen Kraftfahrzeuges und/oder eines Hindernisses erkannt, so können innerhalb des Kraftfahrzeuges entsprechende Maßnahmen ergriffen werden, wie beispielsweise das Straffen der Sicherheitsgurte und/oder das Verstellen der Sitze und insbesondere der Kopfstützen in eine solche Position, in welcher sie den maximalen Schutz für die Kraftfahrzeuginsassen bieten.

In der Betriebsposition gemäß Fig. 2 ist die Bilderfassungseinheit 1 in eine solche Position verfahren, in welcher sie teilweise aus dem Aufnahmeraum 3 herausragt und einen von der Ruheposition gemäß Fig. 1 abweichenden Blickwinkel aufweist. Dementsprechend kann in der Betriebsposition gemäß Fig. 2 ein anderer Bereich hinter dem Kraftfahrzeug erfasst werden. Der Blickwinkel der Bilderfassungseinheit 1 in der Betriebsposition ist angedeutet durch den Pfeil 20 gemäß Fig. 2. Dabei ist die Bilderfassungseinheit 1 derart ausgerichtet, dass mittels der Bilderfassungseinheit 1 der Bereich unterhalb und unmittelbar hinter dem Kraftfahrzeugstoßfänger erfasst werden kann, so dass das Kamerasystem als Rückfahrkamera für den Kraftfahrzeugführer eingesetzt werden kann, indem die mittels der Bilderfassungseinheit 1 erfassten Bilder des Bereiches unmittelbar hinter bzw. unterhalb des Kraftfahrzeuges auf einem Monitor im Kraftfahrzeuginnenraum zur Anzeige gebracht wird.

Die Antriebseinrichtung ist in dem dargestellten Ausführungsbeispiel gebildet durch ein Hebelsystem, welches eine translatorische und eine rotatorische Bewegung der Bilderfassungseinheit ermöglicht. Alternativ können als Antriebseinrichtung auch Gewindestangen, Zahnstangen und dergleichen zum Einsatz kommen.

In dem dargestellten Ausführungsbeispiel ist das Verschlusselement 4 derart angeordnet, dass dieses durch eine translatorische Bewegung von der Ruheposition gemäß Fug. 1 in die Betriebsposition gemäß Fig. 2 verlagert wird. Alternativ hierzu ist es auch möglich, dass das Verschlusselement um einen Drehpunkt herum verschwenkbar angeordnet ist.

Bei dem Verschlusselement 4 handelt es sich in dem dargestellten Ausführungsbeispiel um das Emblem eines Kraftfahrzeugherstellers. Dementsprechend kann die gesamte Anordnung gemäß den Figuren 1 und 2 in optisch besonders vorteilhafter Weise in die Kraftfahrzeugkarosserie integriert werden. Die Lichteigenschaften des Verschlusselementes 4 sind dabei so gewählt, dass zwar Licht von außen in den Aufnahmeraum 3 hineinfallen kann, so dass der Bereich außerhalb durch das Verschlusselement hindurch mittels der Bilderfassungseinheit 1 erfasst werden kann. Es besteht jedoch nicht die Möglichkeit, für einen Betrachter von außen in den Aufnahmeraum 3 durch das Verschlusselement 4 hindurch hinein zu blicken, so dass sich insgesamt eine optisch besonders vorteilhafte Gestaltung des Kraftfahrzeuges ergibt.

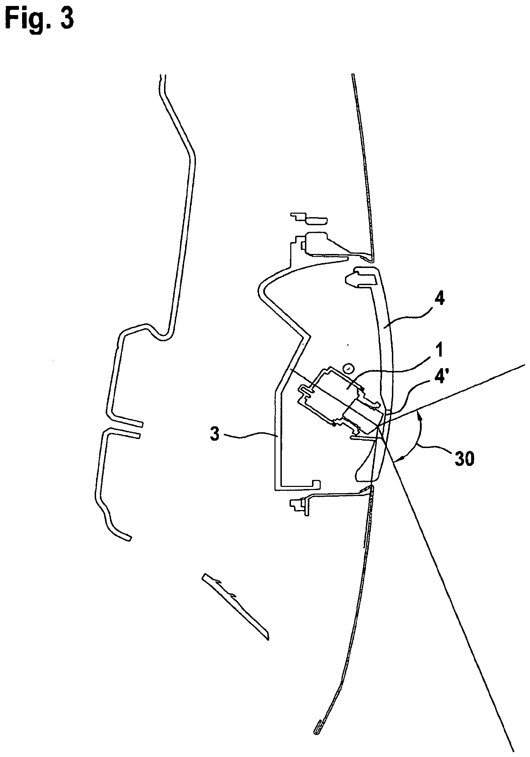

Die Figuren 3 - 5 zeigen Schnittansichten des Aufnahmeraums 3 mit darin angeordneter Bilderfassungseinheit 1 einer zweiten Ausführungsform in verschiedenen Betriebssituationen. Dabei sind identische Bauteile wiederum mit identischen Bezugszeichen versehen.

Fig. 3 zeigt die Schnittansicht des Aufnahmeraums 3 mit der darin angeordneten Bilderfassungseinheit 1 in der Ruheposition, die bei Stillstand des Fahrzeuges sowie bei Vorwärtsfahrt des Fahrzeuges eingenommen wird. Der in den Figuren 3 - 5 dargestellte Schnitt zeigt eine Anordnung des Einbauraumes 3 mit der darin angeordneten Bilderfassungseinheit 1 am Heck des Fahrzeuges.

Dementsprechend ist die Fahrtrichtung bei Vorwärtsfahrt in der Bildebene gemäß den Figuren 3 - 5 nach links gerichtet während die Fahrtrichtung bei Rückwärtsfahrt in der Bildebene gemäß den Figuren 3 - 5 nach rechts gerichtet ist.

In der Ruheposition der Bilderfassungseinheit 1 gemäß Fig. 3 ist die Bilderfassungseinheit 1 innerhalb des Einbauraumes 3 gegenüber der Umgebung durch das Verschlusselement 4 abgedeckt und gegen Umwelteinflüsse geschützt.

Das Verschlusselement 4 weist einen transparenten Bereich 4' auf, durch welchen mit der Bilderfassungseinheit 1 in der Ruheposition gemäß Fig. 3 entsprechend des dargestellten Blickwinkels 30 der Bereich hinter dem Kraftfahrzeug mittels der Bilderfassungseinheit 1 erfassbar ist.

Das mittels der Bilderfassungseinheit 1 erfasste Umgebungsbild der rückwärtigen Ansicht des Kraftfahrzeuges entsprechend des in Fig. 3 dargestellten Blickwinkels 30 kann innerhalb des Fahrzeuges für den Fahrzeugführer auf einer Bildwiedergabeeinheit in Echtzeit angezeigt werden.

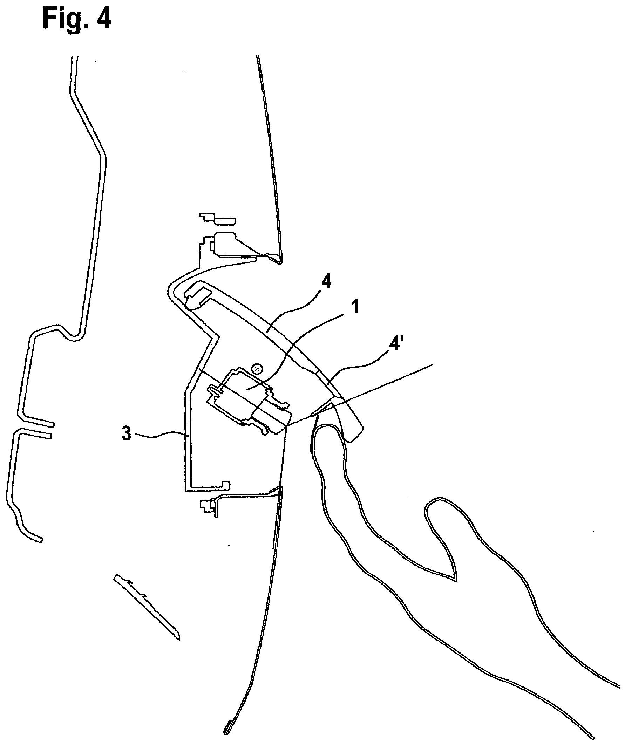

Das Verschlusselement 4 bildet gleichzeitig eine Handhabe zur manuellen Öffnung der Heckklappe des Kraftfahrzeuges. Hierzu kann die als Handhabe ausgebildete Abdeckung 4 von einem Benutzer ergriffen und betätigt werden zur Öffnung der Heckklappe, wie dies in Fig. 4 dargestellt ist. Hierzu untergreift der Benutzer die untere Kante des als Handhabe zur manuellen Öffnung der Heckklappe des Kraftfahrzeuges dienenden Verschlusselementes 4 und verschwenkt dieses von der Ruheposition gemäß Fig. 3 in die Betätigungsposition gemäß Fig. 4. Durch die Verlagerung in die Betätigungsposition 4 wird über eine in den Figuren nicht dargestellte kinematische Kopplung der Handhabe 4 das Schloss der Heckklappe geöffnet, sofern dieses nicht abgeschlossen ist. Hierdurch kann durch die manuelle Betätigung wie sie in Fig. 4 dargestellt ist mittels des als Handhabe zur Betätigung der Heckklappe ausgebildeten Verschlusselementes 4 die Heckklappe durch den Benutzer geöffnet werden. Dabei verbleibt die Bilderfassungseinheit 1 in ihrer Ruheposition welche der Position gemäß Fig. 3 bei stehendem Fahrzeug respektive bei Vorwärtsfahrt des Fahrzeuges entspricht.

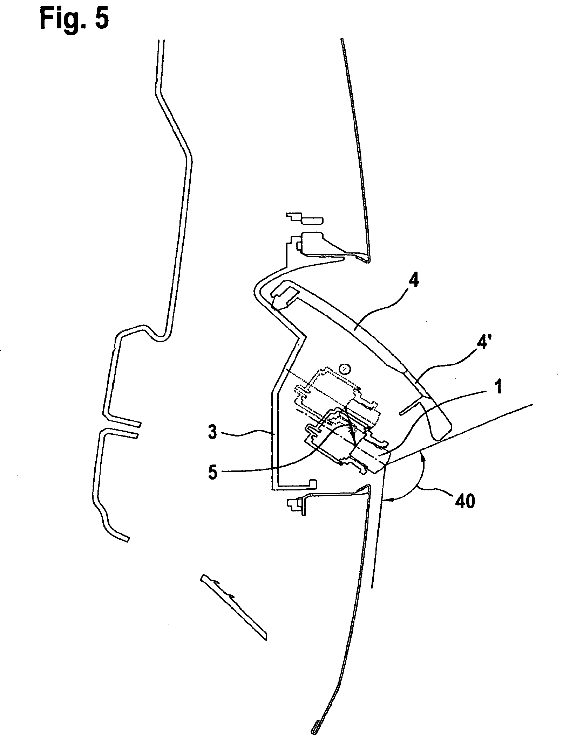

Fig. 5 zeigt die Positionierung von Bilderfassungseinheit 1 und Verschlusselement 4 bei Rückwärtsfahrt des Fahrzeuges. Bei Einlegen des Rückwärtsganges wird automatisch mittels eines elektromotorischen Antriebes das Verschlusselement 4 in die Öffnungsstellung gemäß Fig. 5 verlagert. Ferner wird die Bilderfassungseinheit 1 innerhalb des Aufnahmeraumes 3 entlang eines durch den Pfeil 5 dargestellten linearen Verfahrweges von der Ruheposition entsprechend Fig. 3, die in Fig. 5 gestrichelt dargestellt ist, in die in Fig. 5 dargestellte Betriebsposition verfahren. Bei dem Verfahrweg entsprechend des Pfeils 5 handelt es sich um eine rein translatorische Bewegung. Dadurch, dass gleichzeitig das Verschlusselement 4 in die in Fig. 5 dargestellte Öffnungsposition verlagert wird, kann mittels der Bilderfassungseinheit 1 bei Rückwärtsfahrt des Fahrzeuges der Blickwinkel 40 entlang des Fahrzeughecks senkrecht nach unten sowie unterhalb des Verschlusselementes 4 erfasst werden. Dementsprechend ist der Blickwinkel 40 bei Rückwärtsfahrt und geöffnetem Verschlusselement 4 sowie in die Betriebsposition gemäß Fig. 5 verfahrene Bilderfassungseinheit 1 deutlich vergrößert gegenüber dem Blickwinkel 30, welcher mittels der Bilderfassungseinheit 1 durch den transparenten Bereich 4' des Verschlusselementes 4 in der Ruheposition gemäß Fig. 3 erfasst wird.

Besonders vorteilhaft bei diesem zweiten Ausführungsbeispiel ist es, dass zum einen bei Vorwärtsfahrt des Fahrzeuges in der Position gemäß Fig. 3 durch den transparenten Bereich 4' des Verschlusselementes 4 der Blickwinkel 30 hinter dem Fahrzeug mittels der Bilderfassungseinheit 1 erfassbar ist. Ferner ist durch die Verlagerung der Bilderfassungseinheit 1 in die Betriebsposition gemäß Fig. 5 und die Öffnung des Verschlusselementes 4, wie es in Fig. 5 dargestellt ist, bei Rückwärtsfahrt ein vergrößerter Blickwinkel 40 mittels der Bilderfassungseinheit 1 erfassbar, so dass auch Hindernisse unmittelbar hinter dem Fahrzeug erkannt werden können. Besonders vorteilhaft ist dabei, dass bei dem zweiten Ausführungsbeispiel gemäß den Fig. 3 - 5 das Verschlusselement 4 gleichzeitig als Handhabe zur manuellen Betätigung und Öffnung der Heckklappe des Kraftfahrzeuges ausgebildet ist.

## Patentansprüche

1. Kraftfahrzeugkamerasystem mit einer Bilderfassungseinheit (1) und einer Antriebseinrichtung (2), mittels derer die Bilderfassungseinheit (1) von einer Ruheposition in zumindest eine Betriebsposition verfahrbar ist, wobei die Bilderfassungseinheit (1) in einem Aufnahmeraum (3) eines Kraftfahrzeuges angeordnet ist und der Aufnahmeraum (3) ein bewegliches Verschlusselement (4) aufweist, wobei das Verschlusselement (4) den Aufnahmeraum (3) verschließt, wenn die Bilderfassungseinheit (1) in ihrer Ruheposition ist, und den Aufnahmeraum (3) zumindest teilweise zur Umgebung hin öffnet, wenn die Bilderfassungseinheit (1) in eine Betriebsposition verfahren ist, wobei das Verschlusselement (4) zumindest teilweise transparent ist und die Bilderfassungseinheit (1) in ihrer Ruheposition derart ausgerichtet ist, dass die Bilderfassungseinheit (1) in ihrer Ruheposition durch das Verschlusselement (4) hindurch einen Außenbereich des Kraftfahrzeuges erfasst, **dadurch gekennzeichnet, dass** das Verschlusselement (4) unidirektional transparent ist, sodass Licht von außen in den Aufnahmeraum (3) eindringt und von der Bilderfassungseinheit (1) erfasst wird, wobei kein Licht aus dem Aufnahmeraum (3) sichtbar nach außen dringt, wobei das Verschlusselement (4) durch eine Handhabe zur Betätigung einer Tür und/oder Klappe des Kraftfahrzeuges gebildet ist.

2. System nach Anspruch 1, **dadurch gekennzeichnet, dass** die Bilderfassungseinheit (1) in der Betriebsposition zumindest teilweise außerhalb des Aufnahmeraums (3) angeordnet ist.

3. System nach Anspruch 1 oder 2, **dadurch gekennzeichnet, dass** die Bilderfassungseinheit (1) in der Betriebsposition eine andere relative Ausrichtung gegenüber dem Kraftfahrzeug aufweist, als in der Ruheposition.

4. System nach einem der vorherigen Ansprüche, **dadurch gekennzeichnet, dass** die Bilderfassungseinheit (1) eine oder mehrere optischen Linse/n und/oder ein optisches Linsensystem aufweist.

5. System nach einem der vorherigen Ansprüche, **dadurch gekennzeichnet, dass** die Bilderfassungseinheit (1) ein Weitwinkelobjektiv oder ein Fischaugenobjektiv aufweist.

6. System nach einem der vorherigen Ansprüche, **dadurch gekennzeichnet, dass** das Verschlusselement (4) als optische Linse oder als optisches Linsensystem ausgebildet ist.

7. System nach einem der vorherigen Ansprüche, **dadurch gekennzeichnet, dass** die Position der Bilderfassungseinheit (1) innerhalb des Aufnahmeraums (3) mittels der Antriebseinrichtung (2) variierbar ist.

8. System nach einem der vorherigen Ansprüche, **dadurch gekennzeichnet, dass** die Bilderfassungseinheit (1) mit einer Recheneinheit zur Auswertung und/oder Übermittlung von Bilddaten und/oder mit einer Bildwiedergabeeinrichtung in dem Kraftfahrzeug verbunden ist.

9. System nach einem der vorherigen Ansprüche, **dadurch gekennzeichnet, dass** das Verschlusselement (4) als Emblem und/oder Zierelement ausgebildet ist.

## Claims

1. Motor vehicle camera system with an image capturing unit (1) and a drive device (2), by means of which the image capturing unit (1) can be moved from a position of rest into at least one operating position, wherein the image capturing unit (1) is arranged in a mounting chamber (3) of a motor vehicle, and the mounting chamber (3) has a movable closing element (4), wherein the closing element (4) closes the mounting chamber (3) when the image capturing unit (1) is in its position rest, and opens the mounting chamber (3) at least partially to the environment when the image capturing unit (1) is moved into an operating position, wherein the closing element (4) is at least partially transparent, and the image capturing unit (1) is aligned in its position of rest such that the image capturing unit (1) in its position of rest captures an outer area of the motor vehicle through the closing element (4), **characterised in that** the closing element (4) is unidirectionally transparent, so that light from outside penetrates into the mounting chamber (3) and is captured by the image capturing unit (1), wherein no light from the mounting chamber (3) visibly penetrates to the outside, wherein the closing element (4) is formed by a handle for activating a door and/or flap of the motor vehicle.

2. System according to claim 1, **characterised in that** the image capturing unit (1) in the operating position is arranged at least partially outside the mounting chamber (3).

3. System according to claim 1 or 2, **characterised in that** the image capturing unit (1) in the operating position has a different relative alignment to the motor vehicle than in the position of rest.

4. System according to any of the preceding claims, **characterised in that** the image capturing unit (1) has one or more optical lenses and/or an optical lens system.

5. System according to any of the preceding claims, **characterised in that** the image capturing unit (1) has a wide-angle lens or a fisheye lens.

6. System according to any of the preceding claims, **characterised in that** the closing element (4) is designed as an optical lens or as an optical lens system.

7. System according to any of the preceding claims, **characterised in that** the position of the image capturing unit (1) inside the mounting chamber (3) can be varied by means of the drive device (2).

8. System according to any of the preceding claims, **characterised in that** the image capturing unit (1) is connected to a computing unit for evaluating and/or transmitting image data and/or to an image reproduction device in the motor vehicle.

9. System according to any of the preceding claims, **characterised in that** the closing element (4) is designed as an emblem and/or decorative element.

## Revendications

1. Système de caméra de véhicule automobile avec une unité de prise de vue (1) et avec un dispositif d'entraînement (2) au moyen duquel l'unité de prise de vue (1) peut être déplacée d'une position de repos jusque dans au moins une position de fonctionnement, dans lequel l'unité de prise de vue (1) est agencée dans un espace de logement (3) d'un véhicule automobile et l'espace de logement (3) comporte un élément d'obturation (4) mobile, dans lequel l'élément d'obturation (4) ferme l'espace de logement (3) lorsque l'unité de prise de vue (1) est dans sa position de repos et ouvre l'espace de logement (3) au moins partiellement vers l'environnement lorsque l'unité de prise de vue (1) est déplacée dans une position de fonctionnement, dans lequel l'élément d'obturation (4) est au moins partiellement transparent et l'unité de prise de vue (1) dans sa position de repos est orientée de telle sorte que l'unité de prise de vue (1) dans sa position de repos capte à travers l'élément d'obturation (4) une zone extérieure du véhicule automobile, **caractérisé en ce que** l'élément d'obturation (4) est transparent de manière unidirectionnelle de telle sorte qu'une lumière de l'extérieur pénètre dans l'espace de logement (3) et est captée par l'unité de prise de vue (1), dans lequel aucune lumière ne sort de manière visible de l'espace de logement (3) vers l'extérieur, dans lequel l'élément d'obturation (4) est formé par une manette pour l'actionnement d'une porte et/ou d'une trappe du véhicule automobile.

2. Système selon la revendication 1, **caractérisé en ce que** l'unité de prise de vue (1) dans la position de fonctionnement est agencée au moins partiellement à l'extérieur de l'espace de logement (3).

3. Système selon la revendication 1 ou 2, **caractérisé en ce que** l'unité de prise de vue (1) dans la position de fonctionnement comporte une orientation relative, par rapport au véhicule automobile, différente de celle dans la position de repos.

4. Système selon l'une quelconque des revendications précédentes, **caractérisé en ce que** l'unité de prise de vue (1) comporte une ou plusieurs lentilles et/ou un système optique de lentilles.

5. Système selon l'une quelconque des revendications précédentes, **caractérisé en ce que** l'unité de prise de vue (1) comporte un objectif grand-angulaire ou un objectif à très grand angle.

6. Système selon l'une quelconque des revendications précédentes, **caractérisé en ce que** l'élément d'obturation (4) est réalisé comme une lentille optique ou comme un système optique de lentilles.

7. Système selon l'une quelconque des revendications précédentes, **caractérisé en ce que** la position de l'unité de prise de vue (1) à l'intérieur de l'espace de logement (3) peut varier au moyen du dispositif d'entraînement (2).

8. Système selon l'une quelconque des revendications précédentes, **caractérisé en ce que** l'unité de prise de vue (1) est reliée à une unité de calcul pour évaluer et/ou transmettre des données d'image et/ou à un dispositif de reproduction d'image dans le véhicule automobile.

9. Système selon l'une quelconque des revendications précédentes, **caractérisé en ce que** l'élément d'obturation (4) est réalisé comme un emblème et/ou un élément décoratif.
